# EUROPEAN PATENT APPLICATION

(11) **EP 4 514 002 A1**
(43) Date of publication of application: **26.02.2025**
(21) Application number: 22944128.2
(22) Date of filing: 30.05.2022
(51) Int. Cl.: H04W 72/04

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: ZHANG, Boyuan, Dongguan, Guangdong 523860 (CN); LU, Qianxi, Dongguan, Guangdong 523860 (CN); LENG, Bingxue, Dongguan, Guangdong 523860 (CN)
(74) Representative: RGTH
(86) International application number: PCT/CN2022/096061
(87) International publication number: WO 2023/230787

(57) **Abstract**

A wireless communication method and device are provided, and the method includes: receiving, by a first terminal, first indication information, where the first indication information is used to indicate a shared grant resource; and allocating the grant resource to data to be transmitted on a target logical channel, according to target address information and priority information of logical channels, where the target logical channel includes at least one logical channel, and the target address information includes a target address to which the target logical channel belongs.

## Description

### TECHNICAL FIELD

Embodiments of the present disclosure relate to the field of communication, and in particular, to a wireless communication method, a terminal device, and a network device.

### BACKGROUND

In order to enable the friendly coexistence of various communication systems that use an unlicensed spectrum (also known as licence-free spectrum, shared spectrum) for wireless communication on the spectrum, some countries or regions have regulatory requirements that must be satisfied for the use of the unlicensed spectrum. For example, a communication device follows a listen before talk (Listen Before Talk, LBT) principle, that is, before the communication device transmits a signal on a channel of the unlicensed spectrum, the communication device needs to first perform channel listening. Only when the channel listening result is that the channel is idle, can the communication device transmit the signal; if the channel listening result of the communication device on the channel of the unlicensed spectrum is that the channel is busy, the communication device cannot transmit the signal.

In some scenarios, a sidelink transmission may also use the shared spectrum. In this case, a terminal device needs to perform LBT first before performing the sidelink transmission. The sidelink transmission is performed only when the channel is detected to be idle, by which the transmission efficiency is low. Therefore, how to improve the sidelink transmission performance is a problem that needs to be solved.

### SUMMARY

The present disclosure provides a wireless communication method, a terminal device and a network device, which are beneficial to improving the sidelink transmission performance.

In a first aspect, a wireless communication method is provided, and includes:
receiving, by a first terminal, first indication information, where the first indication information is used to indicate a shared grant resource; and
allocating the grant resource to data to be transmitted on a target logical channel, according to target address information and priority information of logical channels, where the target logical channel includes at least one logical channel, and the target address information includes a target address to which the target logical channel belongs.

In a second aspect, a wireless communication method is provided, and includes:
transmitting, by a first device, first indication information to a first terminal, where the first indication information is used to indicate a shared grant resource; and
receiving, by the first device, second indication information transmitted by the first terminal, where the second indication information is used to indicate whether the shared grant resource is used.

In a third aspect, a terminal device is provided for performing the method in the above first aspect or its various implementations.

Specifically, the terminal device includes a functional module for performing the method in the above first aspect or its various implementations.

In a fourth aspect, a communication device is provided for performing the method in the above second aspect or its various implementations.

Specifically, the communication device includes a functional module for performing the method in the above second aspect or its various implementations.

In a fifth aspect, a terminal device is provided, and includes a processor and a memory. The memory is configured to store a computer program, and the processor is configured to call and run the computer program stored in the memory, to perform the method in the above first aspect or its various implementations.

In a sixth aspect, a communication device is provided, and includes a processor and a memory. The memory is configured to store a computer program, and the processor is configured to call and run the computer program stored in the memory, to perform the method in the above second aspect or its various implementations.

In a seventh aspect, a chip is provided for implementing the method of any one of the above first aspect to the above second aspect or their various implementations.

Specifically, the chip includes: a processor, configured to call and run a computer program from a memory, to cause a device equipped with the apparatus to perform the method of any one of the above first aspect to the above second aspect or their various implementations.

In an eighth aspect, a computer readable storage medium is provided, for storing a computer program, and the computer program causes a computer to perform the method of any one of the above first aspect to the above second aspect or their various implementations.

In a ninth aspect, a computer program product is provided, and includes computer program instructions, and the computer program instructions cause a computer to perform the method of any one of the above first aspect to the above second aspect or their various implementations.

In a tenth aspect, a computer program is provided, and the computer program, when being executed on a computer, causes the computer to perform the method of any one of the above first aspect to the above second aspect or their various implementations.

Through the above technical solutions, the first terminal may receive the first indication information transmitted by other devices (such as a network device or a second terminal), and the first indication information is used to indicate the grant resource shared by other devices with the first terminal. Furthermore, the first terminal may allocate the shared grant resource to the target logical channel in the target address information, according to the target address information and priorities of the logical channels. Furthermore, the first terminal may perform a sidelink transmission based on the shared grant resource, which is beneficial for improving the sidelink transmission performance.

### BRIEF DESCRIPTION OF THE DRAWINGS

FIG. 1 is a schematic diagram of a communication system architecture, applied by the embodiments of the present disclosure.
FIG. 2 is a schematic diagram of another communication system architecture, applied by the embodiments of the present disclosure.
FIG. 3 is a schematic interaction diagram of a wireless communication method, provided by the embodiments of the present disclosure.
FIG. 4 is a schematic block diagram of a terminal device, provided according to the embodiments of the present disclosure.
FIG. 5 is a schematic block diagram of a communication device, provided according to the embodiments of the present disclosure.
FIG. 6 is a schematic block diagram of a communication device, provided according to the embodiments of the present disclosure.
FIG. 7 is a schematic block diagram of a chip, provided according to the embodiments of the present disclosure.
FIG. 8 is a schematic block diagram of a communication system, provided according to the embodiments of the present disclosure.

### DETAILED DESCRIPTION

The technical solutions in the embodiments of the present application will be described in conjunction with the drawings in the embodiments of the present application, and apparently, the described embodiments are a part of the embodiments of the present application, but not all of the embodiments. For the embodiments of the present application, all other embodiments obtained by the ordinary skilled in the art without paying creative efforts belong to the protection scope of the present application.

The technical solutions of the embodiments of the present application may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial communication Network (Non-Terrestrial Networks, NTN) system, a Universal Mobile Telecommunication System (UMTS), a Wireless Local Area Network (WLAN), a Wireless Fidelity (WiFi), a fifth-generation communication (5th-Generation, 5G) system, or other communication systems, etc.

Generally speaking, a number of connections supported by a traditional communication system is limited and is easy to implement, however, with the development of the communication technology, the mobile communication system will not only support the traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc, and the embodiments of the present application may also be applied to these communication systems.

Optionally, the communication system in the embodiments of the present application may be applied to a carrier aggregation (CA) scenario, may also be applied to a dual connectivity (DC) scenario, and may also be applied to a standalone (SA) network deployment scenario.

Optionally, the communication system in the embodiments of the present application may be applied to an unlicensed spectrum, where the unlicensed spectrum may also be considered as a shared spectrum; or the communication system in the embodiments of the present application may also be applied to a licensed spectrum, where the licensed spectrum may also be considered as an unshared spectrum.

The embodiments of the present application describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc.

The terminal device may be a station (STATION, ST) in the WLAN, may be a cellular phone, a cordless phone, a Session Initiation Protocol (SIP) phone, a Wireless Local Loop (WLL) station, or a personal digital assistant (PDA) device, a handheld device with a wireless communication function, a computing device or other processing devices connected to a wireless modem, a vehicle-mounted device, a wearable device, a terminal device in a next generation communication system such as in an NR network, or a terminal device in a Public Land Mobile Network (PLMN) network evolved in the future, etc.

In the embodiments of the present application, the terminal device may be deployed on land, which includes indoor or outdoor, in handheld, worn or vehicle-mounted; may also be deployed on water (e.g., on a ship, etc.); may also be deployed in the air (e.g., on an airplane, a balloon, a satellite, etc.).

In the embodiments of the present application, the terminal device may be a mobile phone, a pad, a computer with a wireless transceiving function, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, etc.

As an example but not a limitation, in the embodiments of the present application, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes for example, a smartwatch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

In the embodiments of the application, the network device may be a device used for communicating with a mobile device. The network device may be an Access Point (AP) in the WLAN, a base station (Base Transceiver Station, BTS) in the GSM or CDMA, may also be a base station (NodeB, NB) in the WCDMA, or may also be an evolutionary base station (Evolutionary Node B, eNB or eNodeB) in the LTE, or a relay station or an access point, or a vehicle-mounted device, a wearable device, and a network device or base station (gNB) in an NR network, or a network device in the PLMN network evolved in the future or a network device in the NTN network, etc.

As an example but not a limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station provided on land, water, and other places.

In the embodiments of the present application, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell, and the small cell here may include: a metro cell, a micro cell, a pico cell, a femto cell, etc, these small cells have characteristics of small coverage range and low transmission power, which are applicable for providing a data transmission service with high speed.

It should be understood that the terms herein "system" and "network" are often used interchangeably herein. The term herein "and/or" is only an association relationship to describe associated objects, meaning that there may be three kinds of relationships, for example, A and/or B may mean three cases where: A exists alone, both A and B exist, and B exists alone. In addition, a character "/" herein generally means that related objects before and after "/" are in an "or" relationship.

The terms used in the implementation parts of the present disclosure are only used to explain the specific embodiments of the present disclosure, but not intended to limit the present disclosure. The terms "first", "second", "third" and "fourth", etc., in the specification, claims, and drawings of the present disclosure are used to distinguish different objects, rather than to describe a specific order. In addition, the terms "include" and "have" and any variations thereof, are intended to cover non-exclusive inclusion.

It should be understood that the "indication" mentioned in the embodiments of the present application may be a direct indication, may also be an indirect indication, or may also represent having an association relationship. For example, A indicates B, which may mean that A directly indicates B, for example, B may be acquired by A; may also mean that A indirectly indicates B, for example, A indicates C, and B may be acquired by C; or may also mean that there is an association relationship between A and B.

In the description of the embodiments of the present application, the term "correspondence" may mean that there is a direct correspondence or indirect correspondence between the two, it may also mean that there is an associated relationship between the two, or it may also mean a relationship of indicating and being indicated or a relationship of configuring and being configured, etc.

In the embodiments of the present application, the "predefined" or "preconfigured" may be implemented by pre-saving corresponding codes, tables or other manners that may be used to indicate related information, in the device (for example, including the terminal device and the network device), and the present application does not limit its specific implementation. For example, the predefined may refer to what is defined in a protocol.

In the embodiments of the present application, the "protocol" may refer to standard protocols in the communication field, for example, may include an LTE protocol, an NR protocol, and related protocols applied in future communication systems, which are not limited to the present application.

In order to facilitate the understanding of the technical solutions of the embodiments of the present disclosure, the technical solutions of the present disclosure are described in detail below by specific embodiments. The following related technologies, as optional solutions, may be randomly combined with the technical solutions of the embodiments of the present disclosure, which all belong to the protection scope of the embodiments of the present disclosure. The embodiments of the present disclosure include at least some of the following contents.

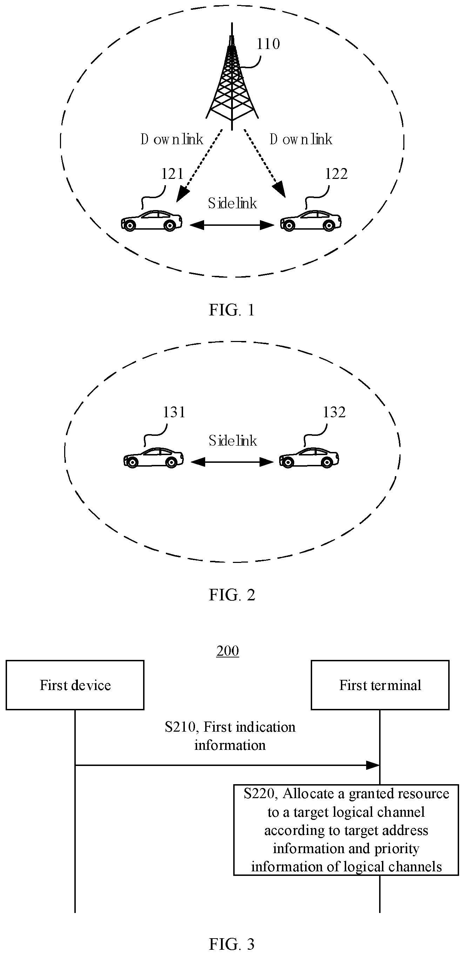

FIG. 1 is a schematic diagram of a communication system, applied to the embodiments of the present disclosure. Transmission resources of vehicle-mounted terminals (a vehicle-mounted terminal 121 and a vehicle-mounted terminal 122) are allocated by a base station 110, and the vehicle-mounted terminals transmit data on a sidelink according to the resources allocated by the base station 110. Specifically, the base station 110 may allocate a resource for a single transmission to a terminal, or may allocate a resource for a semi-static transmission to a terminal.

FIG. 2 is a schematic diagram of another communication system, applied to the embodiments of the present disclosure. Vehicle-mounted terminals (a vehicle-mounted terminal 131 and a vehicle-mounted terminal 132) autonomously select transmission resources on sidelink resources for data transmission. Optionally, the vehicle-mounted terminal may randomly select a transmission resource, or select a transmission resource by listening.

It should be noted that device-to-device (Device to Device, D2D) communication is a sidelink (Sidelink, SL) transmission technology based on terminal-to-terminal. Different from the manner that communication data is received or transmitted via a base station in the traditional cellular system, the Internet of Vehicles system adopts a manner of terminal-to-terminal direct communication, so it has higher spectrum efficiency and lower transmission latency. The 3GPP (3rd Generation Partnership Project) defines two transmission modes, noted as: mode A (sidelink resource allocation mode A) and mode B (sidelink resource allocation mode B), respectively.

Mode A: a transmission resource of a terminal is allocated by a base station, and the terminal transmits data on a sidelink according to the resource allocated by the base station; the base station may allocate a resource for a single transmission to the terminal, or allocate a resource for a semi-static transmission to the terminal.

Mode B: the terminal selects a resource in a resource pool for transmitting data.

Proximity-based services (Proximity-based Services, ProSe) involve device-to-device communication and are mainly aimed at services of a public safety type. In ProSe, by configuring a position of the resource pool in time domain, for example, configuring the resource pool to be discontinuous in time domain, the UE discontinuously transmits/receives data on the sidelink, thereby achieving the effect of power saving.

The Internet of Vehicles system mainly studies a scenario of vehicle-to-vehicle communication, and is mainly aimed at services of relatively high-speed vehicle-to-vehicle communication and vehicle-to-person communication. In V2X, since the vehicle-mounted system has a constant power supply, the power efficiency is not a main problem, but the latency of data transmission is the main problem, so the system design requires the terminal device to perform continuous transmissions and receptions.

For a wearable device (FeD2D) scenario, the scenario in which the wearable device accesses the network via a mobile phone is studied, which is aimed at the scenario of the low mobile speed and low power accessing.

In FeD2D, the base station may configure a discontinuous reception (Discontinuous Reception, DRX) parameter of a remote terminal via a relay terminal.

In some scenarios, a multi-carrier mechanism is introduced, which is mainly reflected in the fact that the UE may support packet segmentation, and transmit the packet by multiple carriers, to improve the data transmission rate; support packet duplication, and duplicate a same packet twice and transmitting them by two carriers, to improve transmission reliability; and support multi-carrier reception enhancement at a receiving end. Specifically, for the packet duplication: the sidelink communication supports sidelink packet duplication and is performed at a packet data convergence protocol (Packet Data Convergence Protocol, PDCP) layer of the UE. For sidelink packet duplication for the transmission, a PDCP protocol data unit (Protocol Data Unit, PDU) is duplicated at a PDCP entity. The duplicated PDCP PDUs of a same PDCP entity are submitted to two different radio link control (Radio Link Control, RLC) entities, and are associated with two different sidelink logical channels, respectively. The duplicated PDCP PDUs of the same PDCP entity are only allowed to be transmitted on different sidelink carriers.

In new radio - vehicle to everything (New Radio - Vehicle to Everything, NR-V2X), autonomous driving is supported, which results in higher requirements for data interaction between vehicles, such as higher throughput, lower latency, higher reliability, larger coverage range, and more flexible resource allocation, etc.

In the LTE-V2X system, a broadcast transmission manner is supported, and in the NR-V2X system, unicast and multicast transmission manners are introduced.

Similar to the LTE V2X system, the NR V2X system may also define the above two resource grant modes: mode A/mode B. Resource acquisition is indicated by a sidelink grant, i.e., the sidelink grant indicates time-frequency positions of a corresponding physical sidelink control channel (Physical Sidelink Control Channel, PSCCH) resource and a physical sidelink shared channel (Physical Sidelink Shared Channel, PSSCH) resource.

In addition to the non-feedback, autonomous UE-initiated hybrid automatic repeat request (Hybrid Automatic Repeat reQuest, HARQ) retransmission, a feedback-based HARQ retransmission is introduced in the NR V2X, which is not limited to unicast communication but also includes multicast communication.

In the NR V2X, since the vehicle-mounted system has a constant power supply, the power efficiency is not the main problem, but the latency of data transmission is the main problem, so the system design requires the terminal device to perform continuous transmissions and receptions.

In some scenarios, the communication device (eg, a terminal device and a network device) may perform LBT first before performing a transmission on a cell configured with shared spectrum (or, license-free spectrum, unlicensed spectrum) channel access. When applying LBT, a transmitter of the communication device listens or senses a channel to determine whether the channel is idle or busy, and performs the transmission only when the channel is sensed to be idle.

When the terminal device detects constant uplink LBT failure, the terminal device takes a corresponding measure. The detection is based on each bandwidth part (Band Width Part, BWP) and all uplink transmissions within the BWP. When constant uplink LBT failure is detected on a secondary cell (SCell), the terminal device reports the uplink LBT failure to the corresponding network device by a media access control control element (Media Access Control Control Element, MAC CE) on a serving cell different from the SCell in which the failure is detected. If the terminal device has no resource available to transmit the MAC CE, the terminal device may transmit a scheduling request (Scheduling Request, SR). When constant uplink LBT failure is detected on a special cell (SpCell), the terminal device switches to another uplink BWP configured with a random access channel (Random Access Channel, RACH) resource on the special cell, initiates an RACH, and reports the failure by an MAC CE. When a plurality of uplink BWPs are available for exchange, the terminal device determines to select which BWP to initiate the RACH and report the failure. For a primary secondary cell (PSCell), if constant uplink LBT failure is detected on all uplink BWPs configured with RACH resources, the terminal device declares secondary cell group (Secondary Cell Group, SCG) radio link failure (Radio Link Failure, RLF) and reports the failure to a master node (Master Node, MN) by SCG failure information (SCGFailureInformation). For a primary cell (PCell), if uplink LBT failure is detected on all uplink BWPs with configured RACH resources, the terminal device declares the RLF.

In some scenarios, the sidelink transmission may also use the shared spectrum. In this case, the terminal device needs to perform LBT first before performing the sidelink transmission, and performs the sidelink transmission only when the channel is detected to be idle, thus the sidelink transmission efficiency is low. Therefore, how to effectively perform the sidelink transmission to improve the sidelink transmission efficiency, is a problem that needs to be solved.

To facilitate the understanding of the technical solutions of the embodiments of the present disclosure, the technical solutions of the present disclosure are described in detail below by specific embodiments. The above related technologies, as optional solutions, may be randomly combined with the technical solutions of the embodiments of the present disclosure, which all belong to the protection scope of the embodiments of the present disclosure. The embodiments of the present disclosure include at least some of the following contents.

FIG. 3 is a schematic interaction diagram of a wireless communication method 200 according to the embodiments of the present disclosure. As shown in FIG. 3, the method 200 includes at least some of the following contents:
S210, receiving, by a first terminal, first indication information, where the first indication information is used to indicate a shared grant resource; and
S220, allocating the grant resource to a target logical channel, according to target address information and priority information of logical channels, where the target logical channel includes at least one logical channel.

In some embodiments, the method 200 further includes:
transmitting data to be transmitted on the target logical channel by using the grant resource.

In some embodiments, allocating the grant resource to the target logical channel may refer to: allocating the grant resource to the data to be transmitted on the target logical channel, or in other words, allocating the grant resource to a data transmission on the target logical channel.

In some embodiments, the data to be transmitted may be sidelink data. For example, the first terminal may transmit the sidelink data by using the shared grant resource.

It should be understood that the embodiments of the present disclosure may be applicable to a communication system on a shared spectrum, such as a sidelink over shared spectrum (SL-U) system, an LTE-U system, an NR-U system, etc.

In some embodiments, the target address information (or, which may be understood as target address information corresponding to first indication information) represents which target address information the grant resource may be shared to, or in other words, a logical channel in which target address information the grant resource may be shared to, i.e., a data transmission on a logical channel in which target address information the grant resource may be shared to.

In some embodiments, the target address information may be used to represent service type information. That is, the target address information may represent which service type of data transmission the grant resource indicated by the first indication information may be shared to.

In the embodiments of the present disclosure, the target address information may be replaced by target address information corresponding to the first indication information.

It should be understood that the target address information may be explicitly indicated or implicitly indicated, which is not limited to the present disclosure.

In some embodiments, the target address information is determined according to target address information carried in the first indication information.

For example, in a case where the first indication information carries target address information, the target address information carried in the first indication information is determined as the target address information.

In some other embodiments, if the first indication information does not carry target address information, the target address information may be any target address information (or in other words, the target address information is not limited), or may also be specific target address information. Optionally, the specific target address information may be indicated by a network device, or may be predefined.

In some embodiments, the target address information may be one piece of target address information, or may be multiple pieces of target address information, or may be any target address information (or in other words, the target address information is not limited).

In some embodiments, the target logical channel is determined according to the target address information.

In some embodiments, the target address information includes a target address to which the target logical channel belongs.

That is, the target logical channel is for the specific target address information, and the target address for the target logical channel is included in the target address information.

In other words, the grant resource indicated by the first indication information may be shared for the data transmission on the logical channel in the target address information.

For example, the target address information includes a target address A, and the target logical channel is a logical channel in the target address A.

For another example, the target address information includes a target address A and a target address B, and the target logical channel may be a logical channel in the target address A, or may be a logical channel in the target address B.

For yet another example, the target address information is any target address, and the target logical channel may be a logical channel in the any target address.

In some embodiments, the first indication information is also referred to as a channel occupancy time (Channel Occupancy Time, COT) sharing indication.

In some embodiments, the first indication information may be used to indicate COT sharing information, and the COT sharing information may be used to determine the shared grant resource.

In some embodiments, the first indication information is used to indicate at least one of:
remaining duration information of a COT, available sub-band information, channel access priority class (CAPC) information, or COT sharing identity (ID) information.

In some embodiments, the COT sharing ID information includes at least one of:
a target terminal ID, a terminal group ID, service identity information, or a sidelink (SL) zone ID.

In some embodiments, the target terminal ID may be used to identify a terminal that is allowed to use the COT sharing information.

In some embodiments, the terminal group ID is used to indicate a terminal group ID that is allowed to use the COT sharing information. That is, terminals within the terminal group identified by the terminal group ID may use the COT sharing information.

In some embodiments, service identity information is used to indicate a service that is allowed to be transmitted by using the COT sharing information. That is, the service identified by the service identity information may use the COT sharing information.

In some embodiments, the SL Zone ID is used to identify a zone that may use the COT sharing information.

In some embodiments, the zone that may use the COT sharing information may be determined by signal quality measurement, such as reference signal receiving power (Reference Signal Receiving Power, RSRP) measurement or channel occupation ratio (Channel Busy Ratio, CBR) measurement.

In some embodiments, the COT sharing information may be shared in an implicit public group, where the public group may determine whether the COT sharing information is valid or whether to use the COT sharing information, according to an evaluated result of a receiving terminal of the COT sharing information.

In some embodiments, an evaluation criterion for the receiving terminal of the COT sharing information to evaluate whether the COT sharing information is valid, may refer to at least one of the following criteria:
a preset COT sharing range or zone, where the sharing range or zone may be determined by the SL Zone ID, or RSRP measurement, etc;
channel quality measurement of the receiving terminal, such as RSRP measurement or CBR measurement, etc.

In some embodiments, in order to ensure that the terminal device on the SL-U system can constantly use the channel within the acquired COT, a guard period (Guard Period, GP) of 16us may be supported in an SL-U frame structure. Optionally, it is considered to reuse a cyclic prefix (Cyclic Prefix, CP) extension to reduce the GP length.

In some embodiments, the first indication information may be transmitted by a first device, and the first device may be a network device, or may be other terminal devices, such as a second terminal.

That is, the network device may share the acquired COT with the terminal device, or different terminal devices may share the COT, for example, the terminal devices that establish a PC5 radio resource control (Radio Resource Control, RRC) connection may share the COT.

Optionally, the first terminal may transmit data to the second device by using the shared grant resource, for example, to transmit uplink data to the network device, or to transmit sidelink data to a third terminal.

Optionally, the third terminal may be the same as the second terminal, or may be different.

It should be understood that the present disclosure does not limit the specific manner of transmitting the first indication information. For example, when the first device is the network device, the first indication information may be transmitted by any downlink signaling (or, a signaling on a Uu interface); when the first device is the terminal device, the first indication information may be transmitted by any sidelink signaling (or, a signaling on a PC5 interface).

As an example but not limitation, the first indication information is transmitted by at least one of the following signalings:
an SL MAC CE, a PC5-RRC message, a downlink MAC CE, or an RRC message.

For example, when the first indication information is transmitted by the network device, the first indication information may be transmitted by a DL MAC CE or an RRC message.

For another example, when the first indication information is transmitted by the second terminal, the first indication information may be transmitted by an SL MAC CE or a PC5-RRC message.

In some embodiments, the first indication information may be transmitted by multiplexing with other data or signalings (e.g., sidelink data or sidelink signaling, or downlink data or downlink signaling), or the first indication information may be transmitted separately, i.e., the first indication information may not be transmitted by multiplexing other data or signalings.

In some embodiments, the first indication information may be transmitted by multiplexing with data or a signaling that has address information overlapping with the target address information.

For example, the target address information includes target address information of the data or signaling transmitted by multiplexing with the first indication information.

In some embodiments, the first indication information is transmitted for resource multiplexing with a first MAC service data unit (SDU) or a first SL MAC CE.

In some implementations, the first MAC SDU or the first SL MAC CE corresponds to first target address information, and target address information carried by the first indication information includes the first target address information.

In other implementations, the first MAC SDU or the first SL MAC CE is an MAC SDU or MAC CE to be transmitted of a transmitting end device of the first indication information. That is, the first MAC SDU or the first SL MAC CE may be an MAC SDU or MAC CE that the transmitting end device currently needs to transmit.

In some cases, the first indication information carries one piece of target address information, and the first target address information is the one piece of target address information. That is, the first MAC SDU or the first SL MAC CE may be an MAC SDU or MAC CE corresponding to the first target address information.

The transmitting end device may transmit the first indication information by resource multiplexing the first indication information with the MAC SDU or SL MAC CE corresponding to the same target address information.

For another example, the first indication information carries multiple pieces of target address information, and the first target address information is any one of the multiple pieces of target address information. That is, the first MAC SDU or the first SL MAC CE may be an MAC SDU or MAC CE corresponding to any one of the multiple pieces of target address information.

That is, the transmitting end device may transmit the first indication information by resource multiplexing the first indication information with the MAC SDU or SL MAC CE corresponding to any one of the multiple pieces of target address information of the first indication information.

For yet another example, the first indication information does not carry target address information, and target address information of the first MAC SDU or the first SL MAC CE is any one piece of target address information.

The fact that the first indication information does not carry the target address information may indicate that the shared grant resource may be shared to the logical channel of any one of target addresses. Therefore, the first MAC SDU or the first SL MAC CE may be an MAC SDU or MAC CE corresponding to any one of target addresses.

That is, in a case where the grant resource indicated by the first indication information may be shared to the logical channel of any one of target addresses, the transmitting end device may transmit the first indication information by resource multiplexing the first indication information with the MAC SDU or SL MAC CE to be transmitted corresponding to any target address information.

In some other embodiments, the first indication information may also not be resource multiplexed with the MAC SDU or SL MAC CE of any target address information. For example, the first indication information may be transmitted separately.

In some embodiments of the present disclosure, before allocating a resource to a logical channel, the first terminal first selects the logical channel, that is, selects a target logical channel to which the grant resource is allocated, that is, selects which logical channels to be allocated with the shared grant resource.

In some embodiments, the method 200 further includes:
selecting the target logical channel, from logical channels that the target address information has.

For example, the first terminal may select the target logical channel, from logical channels that the target address information has, according to at least one of whether there is data to be transmitted on the logical channels, HARQ attributes of the logical channels, and resource attributes available for the logical channels.

As an embodiment, the first terminal first determines a candidate logical channel set according to the target address information, where logical channels in the candidate logical channel set belong to the target address information;
and further, the first terminal selects the target logical channel from the candidate logical channel set according to at least one of whether there is data to be transmitted on the logical channels, HARQ attributes of the logical channels, and resource attributes available for the logical channels.

In some embodiments, the HARQ attribute of the logical channel may include whether an HARQ feedback of the logical channel is enabled.

In some embodiments, the resource attribute available to the logical channel may include at least one of:
whether the logical channel is allowed to use a configured grant (Configured Grant, CG) resource, or whether data to be transmitted on the logical channel is allowed to use the CG resource for transmission; or
a CG resource list available for the logical channel.

In some embodiments, the logical channel may be configured with at least one of the following parameters:
a sidelink CG allowed (sl-configuredgranttypeallowed), used to configure whether the logical channel is allowed to use the CG resource for sidelink transmission;
a sidelink allowed CG list (sl-allowedCG-list), used to configure a CG resource that the logical channel is allowed to use for sidelink transmission;
a sidelink HARQ feedback enable (sl-HARQ-FeedbackEnabled), used to configure whether an HARQ feedback of the logical channel is enabled.

In some embodiments, the target logical channel is a logical channel satisfying at least one condition of:
a condition 1 that there is data to be transmitted on the target logical channel;
a condition 2 that in a case where the grant resource indicated by the first indication information is a configured grant (CG) resource, the target logical channel is configured to be allowed to use the CG resource;
a condition 3 that in a case where the grant resource indicated by the first indication information is a CG resource, an available CG resource configuration corresponding to the target logical channel includes the CG resource indicated by the first indication information; or
a condition 4 that an HARQ attribute of the target logical channel and an HARQ attribute corresponding to a logical channel with a highest priority are the same.

In some embodiments, the target address information includes one piece of target address information, and the target logical channel belongs to the one piece of target address information.

In some embodiments, the target address information includes multiple pieces of target address information, and the target logical channel belongs to second target address information of the multiple pieces of target address information. For example, the second target address information is target address information of a logical channel with a highest priority among the multiple pieces of target address information. Optionally, the logical channel with the highest priority may refer to a logical channel with the highest priority among the logical channels satisfying at least one of the above condition 1 to condition 3.

In some embodiments, the condition that the HARQ attribute of the target logical channel and the HARQ attribute corresponding to the logical channel with the highest priority are the same, may include:
a condition that the target logical channel and the logical channel with the highest priority both enable the HARQ feedback; or
a condition that the target logical channel and the logical channel with the highest priority both do not enable the HARQ feedback.

In some embodiments, the condition that the target logical channel is configured to be allowed to use the CG resource, includes:
a condition that a sidelink CG type allowed (sl-configuredgranttypeallowed) parameter corresponding to the target logical channel is set to be true.

In some embodiments, the condition that the available CG resource configuration corresponding to the target logical channel includes the CG resource indicated by the first indication information, includes:
a condition that a sidelink allowed CG list (sl-allowedCG-list) configuration corresponding to the target logical channel includes a CG index (configured grant index) corresponding to the grant resource indicated by the first indication information. That is, the target logical channel is allowed to use the grant resource indicated by the first indication information.

In some embodiments of the present disclosure, the S220 includes:
allocating the grant resource indicated by the first indication information to the target logical channel in sequence in descending order of priorities of the logical channels. That is, the resources are allocated to the selected logical channels (i.e., the target logical channel) in sequence in descending order of logical channel priorities.

In some embodiments, the network device may configure the following parameters for each logical channel by an RRC signaling:
a logical channel priority (priority), where the smaller the value of the priority, the higher the corresponding priority;
a prioritized bit rate (Prioritized Bit Rate, PBR), which represents a minimum rate that the logical channel needs to be guaranteed;
a bucket size duration (bucketSizeDuration, BSD), where this parameter decides a depth of a token bucket corresponding to the logical channel.

In some embodiments, an MAC layer of the first terminal may maintain a variable SBj for each logical channel j, where j is an integer, and SBj is set as follows:
(1) when establishing the logical channel j, initializing SBj to 0;
(2) increasing SBj by PBR*T before performing logical channel prioritization (Logical Channel Prioritization, LCP) processing procedure each time, where T is a time interval from a last time instant when SBj was increased to a current time instant;
(3) if the SBj updated according to the step (2) is larger than a sidelink token bucket capacity, setting SBj to the sidelink token bucket capacity.

In some embodiments of the present disclosure, allocating the grant resource to the target logical channel, according to the target address information and the priority information of the logical channels, includes:
step 1: selecting a logical channel j with SBj greater than 0 among the target logical channel, and allocating a resource to each logical channel in sequence in descending order of priorities of the logical channels;
in some embodiments, if a PBR of the logical channel j is set to be infinite, and in a case where a resource is allocated to all data to be transmitted on the logical channel j, a resource is then allocated to a logical channel with a priority lower than that of the logical channel j;
step 2: subtracting, from SBj corresponding to the logical channel j, a size of an MAC SDU allocated to the logical channel j, to obtain an updated SBj.

Optionally, if there are remaining grant resources after performing step 1 and step 2, regardless of the size of SBj, the remaining grant resources are allocated to each logical channel in sequence in descending order of the logical channel priorities. Only when data of the logical channel with a high priority has been transmitted completely and the grant resource has not been exhausted, the logical channel with a low priority can be served. Logical channels with a same priority should be served equally.

In some embodiments of the present disclosure, the method 200 further includes:
transmitting, by the first terminal, second indication information, where the second indication information is used to indicate whether the shared grant resource is used.

In some embodiments, the first terminal may determine whether to use the shared grant resource.

Optionally, in a case where there is no logical channel satisfying at least one of the aforementioned condition 1 to condition 4, the first terminal determines not to use the shared grant resource. For example, if the candidate logical channel set does not include a logical channel with data to be transmitted, or the grant resource indicated by the first indication information is the CG resource but the logical channel in the candidate logical channel set is not allowed to use the CG resource, or the CG resource list allowed to be used does not include the CG resource indicated by the first indication information, the first terminal may determine not to use the shared grant resource.

In some embodiments, the first terminal may transmit the second indication information to the first device, and the first device may be a network device or other terminals, such as the second terminal.

In some embodiments, the second indication information is transmitted by at least one of:
feeding back by a feedback resource corresponding to the first indication information;
feeding back by an MAC CE;
feeding back by a PC5-RRC message; or
feeding back by an RRC message.

In some embodiments, the feeding back by the feedback resource corresponding to the first indication information includes:
feeding back by a physical sidelink feedback channel (Physical Sidelink Feedback Channel, PSFCH) or a physical uplink control channel (Physical Uplink Control Channel, PUCCH).

In some embodiments, feeding back the first indication information by the MAC CE may include that the first indication information may be fed back by a newly added MAC CE or an existing MAC CE.

For example, the second indication information is fed back by a first MAC CE, and the first MAC CE is dedicated to feeding back whether the shared grant resource is used. That is, the first MAC CE may be an MAC CE dedicated to COT sharing feedback.

In some embodiments, the second indication information is used to indicate at least one of the following states of:
correctly receiving the first indication information but not using the grant resource indicated by the first indication information;
correctly receiving the first indication information and using the grant resource indicated by the first indication information; or
not correctly receiving the first indication information.

In some embodiments of the present disclosure, the method 200 further includes:
in a case where the grant resource indicated by the first indication information is determined to be used, triggering an MAC layer to perform resource reselection.

For example, in a case where the first terminal determines to use the shared grant resource, the first terminal may use the grant resource to transmit the data currently to be transmitted, that is, not use the previously selected resource, and further may trigger the MAC layer to perform resource reselection, for subsequent data transmission.

Optionally, for the first terminal adopting the transmission mode of mode B (that is, the first terminal autonomously selects the resource for sidelink transmission in the resource pool), in a case of determining to use the grant resource indicated by the first indication information, the first terminal triggers the MAC layer to perform the resource reselection.

Optionally, in some embodiments, the method 200 further includes:
after the grant resource indicated by the first indication information is used, triggering an MAC layer to perform resource reselection.

For example, after the first terminal uses the shared grant resource, the first terminal may trigger the MAC layer to perform the resource reselection again, for subsequent data transmission.

In some embodiments of the present disclosure, the design of the shared COT needs to consider information such as the processing time of the COT sharing indication and the minimum listening time specified by regulations.

In some embodiments, inheritance and forwarding of COT sharing information needs to satisfy the following processing time condition that:
a time length from an end position of a symbol receiving the COT sharing indication to a start position of a symbol transmitting the COT sharing indication is greater than or equal to Tproc, SL-U, where Tproc, SL-U is the processing time to be considered for the inheritance and forwarding of the COT sharing information.

In some embodiments, when there are multiple pieces of COT sharing information received by the first terminal that satisfy the processing time condition, the first terminal may select, from the multiple pieces of COT sharing information, target COT sharing information for the inheritance and forwarding.

For example, the first terminal may select the target COT sharing information according to the remaining COT lengths in the multiple pieces of COT sharing information. For example, the COT sharing information with a longest remaining COT length is selected. Herein, the COT sharing information with the longest remaining COT length forwarded by the first terminal is determined relative to the transmitting time instant of the first terminal.

For another example, when there are multiple pieces of COT sharing information with the same remaining COT length, the first terminal selects the target COT sharing information according to CAPC values in the multiple pieces of COT sharing information. For example, the COT sharing information with the largest CAPC value is selected.

In conclusion, in the embodiments of the present disclosure, the first terminal may receive the first indication information transmitted by other devices (such as a network device or a second terminal), and the first indication information is used to indicate the grant resource shared by other devices with the first terminal. Furthermore, the first terminal may allocate the shared grant resource to the target logical channel in the target address information, according to the target address information and priorities of the logical channels. Furthermore, the first terminal may perform a sidelink transmission based on the shared grant resource, which is beneficial for improving the sidelink transmission performance.

In some implementations, the first indication information may be transmitted by any downlink message or sidelink message. For example, the first indication information may be transmitted by multiplexing with other data or signalings (eg, sidelink data or a sidelink signaling, or downlink data or a downlink signaling), or the first indication information may be transmitted separately, i.e., the first indication information may not be transmitted by multiplexing with other data or signalings.

In some implementations, the first terminal may determine a usage mode of the grant resource indicated by the first indication information. For example, the first terminal may first select the target logical channel according to the target address information, and further allocate the shared grant resource to the target logical channel in sequence in descending order of logical priorities.

In some implementations, the first terminal may further transmit second indication information to the transmitting end terminal of the first indication information, to indicate whether the first terminal uses the shared grant resource.

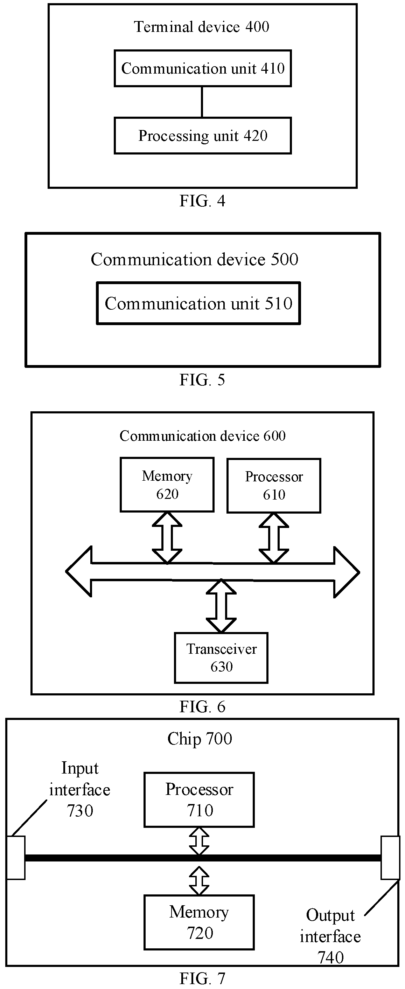

The method embodiments of the present disclosure are described in detail above with reference to FIG. 3, and apparatus embodiments of the present disclosure are described in detail below with reference to FIG. 4 to FIG. 8, and it should be understood that the apparatus embodiments and the method embodiments correspond to each other, and the similar description of the apparatus embodiments may refer to the method embodiments.

FIG. 4 shows a schematic block diagram of a terminal device 400, according to the embodiments of the present disclosure. As shown in FIG. 4, the terminal device 400 includes:
a communication unit 410, configured to receive first indication information, where the first indication information is used to indicate a shared grant resource; and
a processing unit 420, configured to allocate the grant resource to data to be transmitted on a target logical channel, according to target address information and priority information of logical channels, where the target logical channel includes at least one logical channel, and the target address information includes target address to which the target logical channel belongs.

In some embodiments, if the first indication information carries target address information, the target address information is the target address information carried in the first indication information; or
if the first indication information does not carry target address information, the target address information is any target address information.

In some embodiments, the first indication information is used to indicate at least one of:
remaining duration information of a channel occupancy time (COT), available sub-band information, channel access priority class (CAPC) information, or COT sharing identity (ID) information.

In some embodiments, the COT sharing identity (ID) information includes at least one of:
a target terminal ID, a terminal group ID, service identity information, or a sidelink (SL) zone ID.

In some embodiments, the first indication information is transmitted by at least one of following signalings:
an SL media access control control element (MAC CE), a PC5-radio resource control (RRC) message, a downlink MAC CE, or an RRC message.

In some embodiments, the first indication information is transmitted for resource multiplexing with a first MAC service data unit (SDU) or a first SL MAC CE, where
the first MAC SDU or the first SL MAC CE corresponds to first target address information, and target address information carried by the first indication information includes the first target address information, or
the first MAC SDU or the first SL MAC CE is an MAC SDU or MAC CE to be transmitted of a transmitting end device of the first indication information.

In some embodiments, the first indication information carries one piece of target address information, and the first target address information is the one piece of target address information; or
the first indication information carries multiple pieces of target address information, and the first target address information is any one of the multiple pieces of target address information; or
the first indication information does not carry target address information, and target address information of the first MAC SDU or the first SL MAC CE is any one piece of target address information.

In some embodiments, the processing unit 420 is further configured to:
select the target logical channel, from logical channels that the target address information has.

In some embodiments, the target logical channel is a logical channel satisfying at least one of:
a condition that there is data to be transmitted on the target logical channel;
a condition that in a case where the grant resource indicated by the first indication information is a configured grant (CG) resource, the target logical channel is configured to be allowed to use the CG resource;
a condition that in a case where the grant resource indicated by the first indication information is a CG resource, an available CG resource configuration corresponding to the target logical channel includes the CG resource indicated by the first indication information; or
a condition that a hybrid automatic repeat request (HARQ) attribute of the target logical channel and an HARQ attribute corresponding to a logical channel with a highest priority are the same.

In some embodiments, the first indication information carries one piece of target address information, and the target logical channel belongs to the one piece of target address information.

In some embodiments, the first indication information carries multiple pieces of target address information, and the target logical channel belongs to second target address information of the multiple pieces of target address information, where the second target address information is target address information of a logical channel with a highest priority among the multiple pieces of target address information.

In some embodiments, the condition that the target logical channel is configured to be allowed to use the CG resource, includes:
a condition that a sidelink CG type allowed (sl-configuredgranttypeallowed) parameter corresponding to the target logical channel is set to be true.

In some embodiments, the condition that the available CG resource configuration corresponding to the target logical channel includes the CG resource indicated by the first indication information, includes:
a condition that a sidelink allowed CG list (sl-allowedCG-list) configuration corresponding to the target logical channel includes a CG index corresponding to the grant resource indicated by the first indication information.

In some embodiments, the processing unit 420 is further configured to:
allocate the grant resource to the target logical channel in sequence in descending order of priorities of the logical channels.

In some embodiments, the processing unit 420 is further configured to:
select a logical channel j with SBj greater than 0 among the target logical channel, and allocate a resource to each logical channel in sequence in descending order of priorities of the logical channels, where j is an integer and SBj is a variable maintained by the logical channel j; and
subtract, from SBj corresponding to the logical channel j, a size of an MAC SDU allocated to the logical channel j, to obtain an updated SBj.

In some embodiments, in a case where a prioritized bit rate (PBR) of the logical channel j is set to be infinite, and in a case where a resource is allocated to all data to be transmitted on the logical channel j, a resource is then allocated to a logical channel with a priority lower than that of the logical channel j.

In some embodiments, the terminal device initializes SBj to 0 when establishing the logical channel j; and/or
the terminal device increases SBj by PBR*T before performing logical channel prioritization (LCP) processing procedure each time, where T is a time interval from a last time instant when SBj was increased to a current time instant; and/or
in a case where the updated SBj is larger than a sidelink token bucket capacity, SBj is set to the sidelink token bucket capacity.

In some embodiments, the communication unit 410 is further configured to:
transmit second indication information, where the second indication information is used to indicate whether the shared grant resource is used.

In some embodiments, the second indication information is transmitted by at least one of:
feeding back by a feedback resource corresponding to the first indication information;
feeding back by an MAC CE;
feeding back by a PC5-RRC message; or
feeding back by an RRC message.

In some embodiments, the feeding back by the feedback resource corresponding to the first indication information includes:
feeding back by a physical sidelink feedback channel (PSFCH) or a physical uplink control channel (PUCCH).

In some embodiments, feeding back the second indication information by the MAC CE includes:
feeding back the second indication information by a first MAC CE, where the first MAC CE is dedicated to feeding back whether the shared grant resource is used.

In some embodiments, the second indication information is used to indicate at least one of following states of:
correctly receiving the first indication information but not using the grant resource indicated by the first indication information;
correctly receiving the first indication information and using the grant resource indicated by the first indication information; or
not correctly receiving the first indication information.

In some embodiments, the processing unit 420 is further configured to:
in a case where the grant resource indicated by the first indication information is determined to be used, trigger an MAC layer to perform resource reselection.

In some embodiments, the processing unit 420 is further configured to:
after the grant resource indicated by the first indication information is used, trigger an MAC layer to perform resource reselection.

In some embodiments, the first indication information is transmitted by a network device or transmitted by a second terminal.

In some embodiments, the communication unit 410 is further configured to:
transmit the data to be transmitted on the target logical channel by using the grant resource.

Optionally, in some embodiments, the above communication unit may be a communication interface or a transceiver, or an input and output interface of a communication chip or a system-on-chip. The above processing unit may be one or more processors.

It should be understood that the terminal device 400 according to the embodiments of the present disclosure may correspond to the first terminal in the method embodiments of the present disclosure, and the above and other operations and/or functions of various units in the terminal device 400 are respectively to implement the corresponding procedures of the first terminal in the method 200 shown in FIG. 3, which will not be repeated here for the sake of brevity.

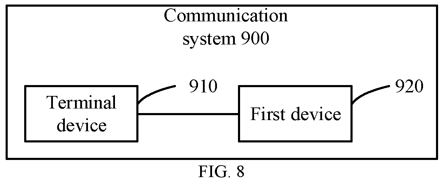

FIG. 5 is a schematic block diagram of a communication device according to the embodiments of the present disclosure. The communication device 500 of FIG. 8 includes:
a communication unit 510, configured to send first indication information to a first terminal, where the first indication information is used to indicate a shared grant resource; and receive second indication information transmitted by the first terminal, where the second indication information is used to indicate whether the shared grant resource is used.

In some embodiments, the first device is a network device or a second terminal.

In some embodiments, the first indication information is used to indicate at least one of:
remaining duration information of a channel occupancy time (COT), available sub-band information, channel access priority class (CAPC) information, or COT sharing identity (ID) information.

In some embodiments, the COT sharing identity (ID) information includes at least one of:
a target terminal ID, a terminal group ID, service identity information, or a sidelink (SL) zone ID.

In some embodiments, the first indication information is transmitted by at least one of following signalings:
an SL media access control control element (MAC CE), a PC5-radio resource control (RRC) message, a downlink MAC CE, or an RRC message.

In some embodiments, the first indication information is transmitted for resource multiplexing with a first MAC service data unit (SDU) or a first SL MAC CE, where
the first MAC SDU or the first SL MAC CE corresponds to first target address information, and target address information carried by the first indication information includes the first target address information, or
the first MAC SDU or the first SL MAC CE is an MAC SDU or MAC CE to be transmitted of a transmitting end device of the first indication information.

In some embodiments, the first indication information carries one piece of target address information, and the first target address information is the one piece of target address information; or
the first indication information carries multiple pieces of target address information, and the first target address information is any one of the multiple pieces of target address information; or
the first indication information does not carry target address information, and target address information of the first MAC SDU or the first SL MAC CE is any one piece of target address information.

In some embodiments, the second indication information is transmitted by at least one of:
feeding back by a feedback resource corresponding to the first indication information;
feeding back by an MAC CE;
feeding back by a PC5-RRC message; or
feeding back by an RRC message.

In some embodiments, the feeding back by the feedback resource corresponding to the first indication information includes:
feeding back by a physical sidelink feedback channel (PSFCH) or a physical uplink control channel (PUCCH).

In some embodiments, feeding back the second indication information by the MAC CE includes:
feeding back by a first MAC CE, where the first MAC CE is dedicated to feeding back whether the shared grant resource is used.

In some embodiments, the second indication information is used to indicate at least one of following states of:
correctly receiving the first indication information but not using the grant resource indicated by the first indication information;
correctly receiving the first indication information and using the grant resource indicated by the first indication information; or
not correctly receiving the first indication information.

Optionally, in some embodiments, the above communication unit may be a communication interface or a transceiver, or an input and output interface of a communication chip or a system-on-chip. The above processing unit may be one or more processors.

It should be understood that the communication device 500 according to the embodiments of the present disclosure may correspond to the first device in the method embodiments of the present disclosure, and the above and other operations and/or functions of various units in the communication device 500 are respectively to implement the corresponding procedures of the first device in the method 200 shown in FIG. 3, which will not be repeated here for the sake of brevity.

FIG. 6 is a schematic structural diagram of a communication device 600 provided in the embodiments of the present application. The communication device 600 shown in FIG. 6 includes a processor 610, which may invoke and execute a computer program from a memory, to implement the method in the embodiments of the present application.

Optionally, as shown in FIG. 6, the communication device 600 further includes a memory 620. Herein, the processor 610 may invoke and execute a computer program from the memory 620 to implement the method in the embodiments of the present application.

Herein, the memory 620 may be a separate device independent from the processor 610, or may also be integrated into the processor 610.

Optionally, as shown in FIG. 6, the communication device 600 may also include a transceiver 630, and the processor 610 may control the transceiver 630 to communicate with other devices, and specifically, to transmit information or data to other devices, or receive information or data transmitted by other devices.

Herein, the transceiver 630 may include a transmitter and a receiver. The transceiver 630 may further include antennas, and the number of antennas may be one or more.

Optionally, the communication device 600 may specifically be the first device of the embodiments of the present application, and the communication device 600 may implement the corresponding procedure implemented by the first device in the various methods of the embodiments of the present application, which will not be repeated here for the sake of brevity.

Optionally, the communication device 600 may specifically be the first terminal of the embodiments of the present application, and the communication device 600 may implement the corresponding procedure implemented by the first terminal in the various methods of the embodiments of the present application, which will not be repeated here for the sake of brevity.

FIG. 7 is a schematic structural diagram of a chip of the embodiments of the present application. The chip 700 shown in FIG. 7 includes a processor 710, the processor 710 may invoke and execute a computer program from a memory to implement the method in the embodiments of the present application.

Optionally, as shown in FIG. 7, the chip 700 may further include a memory 720. Herein, the processor 710 may invoke and execute a computer program from the memory 720 to implement the method in the embodiments of the present application.

Herein, the memory 720 may be a separate device independent from the processor 710, or may also be integrated into the processor 710.

Optionally, the chip 700 may further include an input interface 730. Herein, the processor 710 may control the input interface 730 to communicate with other devices or chips, and specifically, the input interface 730 may acquire information or data sent by other devices or chips.

Optionally, the chip 700 may further include an output interface 740. Herein, the processor 710 may control the output interface 740 to communicate with other devices or chips, and specifically, the output interface 740 may output information or data to other devices or chips.

Optionally, the chip may be applied to the first device in the embodiments of the present application, and the chip may implement the corresponding procedure implemented by the first device in the various methods of the embodiments of the present application, which will not be repeated here for the sake of brevity.

Optionally, the chip may be applied to the first terminal in the embodiments of the present application, and the chip may implement the corresponding procedure implemented by the first terminal in the various methods of the embodiments of the present application, which will not be repeated here for the sake of brevity.

It should be understood that the chip mentioned in the embodiments of the present application may also be called a system on chip, a system chip, a chip system or a system-on-chip chip, etc.

FIG. 8 is a schematic block diagram of a communication system 900, provided by the embodiments of the present application. As shown in FIG. 8, the communication system 900 includes a terminal device 910 and a first device 920.

Herein, the terminal device 910 may be configured to implement the corresponding functions implemented by the first terminal in the above methods, and the first device 920 may be configured to implement the corresponding functions implemented by the first device in the above methods, which will not be repeated here for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present application may be implemented or performed. A general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present application may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

The embodiments of the present application further provide a computer readable storage medium for storing a computer program.

Optionally, the computer readable storage medium may be applied to the first device in the embodiments of the present application, and the computer program causes a computer to perform the corresponding procedure implemented by the first device in the various methods of the embodiments of the present application, which will not be repeated here for the sake of brevity.

Optionally, the computer readable storage medium may be applied to the first terminal in the embodiments of the present application, and the computer program causes a computer to perform the corresponding procedure implemented by the first terminal in various methods of the embodiments of the present application, which will not be repeated here for the sake of brevity.

The embodiments of the present application further provide a computer program product including a computer program instruction.

Optionally, the computer program product may be applied to the first device in the embodiments of the present application, and the computer program instruction causes a computer to perform the corresponding procedure implemented by the first device in the various methods of the embodiments of the present application, which will not be repeated here for the sake of brevity.

Optionally, the computer program product may be applied to the first terminal in the embodiments of the present application, and the computer program instruction causes a computer to perform the corresponding procedure implemented by the first terminal in various methods of the embodiments of the present application, which will not be repeated here for the sake of brevity.

The embodiments of the present application further provide a computer program.

Optionally, the computer program may be applied to the first device in the embodiments of the present application, the computer program when being executed on a computer, causes the computer to perform the corresponding procedure implemented by the first device in various methods of the embodiments of the present application, which will not be repeated here for the sake of brevity.

Optionally, the computer program may be applied to the first terminal in the embodiments of the present application, the computer program when being executed on a computer, causes the computer to perform the corresponding procedure implemented by the first terminal in various methods of the embodiments of the present application, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in the form of a software functional unit and sold or used as an independent product, they may be stored in a computer readable storage medium. Based on this understanding, the technical solution of the present application essentially, or a part of the technical solution that contributes to the prior art, or a part of the technical solution, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A wireless communication method, comprising:
receiving, by a first terminal, first indication information, wherein the first indication information is used to indicate a shared grant resource; and
allocating the grant resource to data to be transmitted on a target logical channel, according to target address information and priority information of logical channels, wherein the target logical channel comprises at least one logical channel, and the target address information comprises a target address to which the target logical channel belongs.

2. The method according to claim 1, wherein the first indication information is used to indicate at least one of:
remaining duration information of a channel occupancy time (COT), available sub-band information, channel access priority class (CAPC) information, or COT sharing identity (ID) information.

3. The method according to claim 2, wherein the COT sharing identity (ID) information comprises at least one of: a target terminal ID, a terminal group ID, service identity information, or a sidelink (SL) zone ID.

4. The method according to any one of claims 1 to 3, wherein the first indication information is transmitted by at least one of following signalings:
an SL media access control control element (MAC CE), a PC5-radio resource control (RRC) message, a downlink MAC CE, or an RRC message.

5. The method according to any one of claims 1 to 4, wherein the first indication information is transmitted for resource multiplexing with a first MAC service data unit (SDU) or a first SL MAC CE, wherein
the first MAC SDU or the first SL MAC CE corresponds to first target address information, and target address information carried by the first indication information comprises the first target address information, or
the first MAC SDU or the first SL MAC CE is an MAC SDU or MAC CE to be transmitted of a transmitting end device of the first indication information.

6. The method according to claim 5, wherein the first indication information carries one piece of target address information, and the first target address information is the one piece of target address information; or
the first indication information carries multiple pieces of target address information, and the first target address information is any one of the multiple pieces of target address information; or
the first indication information does not carry target address information, and target address information of the first MAC SDU or the first SL MAC CE is any one piece of target address information.

7. The method according to any one of claims 1 to 6, wherein the method further comprises:
selecting the target logical channel, from logical channels that the target address information has, according to at least one of whether there is data to be transmitted on the logical channels, hybrid automatic repeat request (HARQ) attributes of the logical channels, and resource attributes available for the logical channels.

8. The method according to claim 7, wherein the target logical channel is a logical channel satisfying at least one of:
a condition that there is data to be transmitted on the target logical channel;
a condition that in a case where the grant resource indicated by the first indication information is a configured grant (CG) resource, the target logical channel is configured to be allowed to use the CG resource;
a condition that in a case where the grant resource indicated by the first indication information is a CG resource, an available CG resource configuration corresponding to the target logical channel comprises the CG resource indicated by the first indication information; or
a condition that a hybrid automatic repeat request (HARQ) attribute of the target logical channel and an HARQ attribute corresponding to a logical channel with a highest priority are the same.

9. The method according to claim 8, wherein the first indication information carries one piece of target address information, and the target logical channel belongs to the one piece of target address information.

10. The method according to claim 8, wherein the first indication information carries multiple pieces of target address information, and the target logical channel belongs to second target address information of the multiple pieces of target address information, wherein the second target address information is target address information of a logical channel with a highest priority among the multiple pieces of target address information.

11. The method according to any one of claims 8 to 10, wherein the condition that the target logical channel is configured to be allowed to use the CG resource, comprises:
a condition that a sidelink CG type allowed (sl-configuredgranttypeallowed) parameter corresponding to the target logical channel is set to be true.

12. The method according to any one of claims 8 to 11, wherein the condition that the available CG resource configuration corresponding to the target logical channel comprises the CG resource indicated by the first indication information, comprises:
a condition that a sidelink allowed CG list (sl-allowedCG-list) configuration corresponding to the target logical channel comprises a CG index corresponding to the grant resource indicated by the first indication information.

13. The method according to any one of claims 1 to 12, wherein allocating the grant resource to the data to be transmitted on the target logical channel, according to the target address information and the priority information of the logical channels, comprises:
allocating the grant resource to the target logical channel in sequence in descending order of priorities of the logical channels.

14. The method according to any one of claims 1 to 13, wherein allocating the grant resource to the data to be transmitted on the target logical channel, according to the target address information and the priority information of the logical channels, comprises:
selecting a logical channel j with SBj greater than 0 among the target logical channel, and allocating a resource to each logical channel in sequence in descending order of priorities of the logical channels, wherein j is an integer and SBj is a variable maintained by the logical channel j;
subtracting, from SBj corresponding to the logical channel j, a size of an MAC SDU allocated to the logical channel j, to obtain an updated SBj.

15. The method according to claim 14, wherein in a case where a prioritized bit rate (PBR) of the logical channel j is set to be infinite, and in a case where a resource is allocated to all data to be transmitted on the logical channel j, a resource is then allocated to a logical channel with a priority lower than that of the logical channel j.

16. The method according to claim 14 or 15, wherein
the first terminal initializes SBj to 0 when establishing the logical channel j; and/or
the first terminal increases SBj by PBR*T before performing logical channel prioritization (LCP) processing procedure each time, wherein T is a time interval from a last time instant when SBj was increased to a current time instant; and/or
in a case where the updated SBj is larger than a sidelink token bucket capacity, SBj is set to the sidelink token bucket capacity.

17. The method according to any one of claims 1 to 16, wherein the method further comprises:
transmitting, by the first terminal, second indication information, wherein the second indication information is used to indicate whether the shared grant resource is used.

18. The method according to claim 17, wherein the second indication information is transmitted by at least one of:
feeding back by a feedback resource corresponding to the first indication information;
feeding back by an MAC CE;
feeding back by a PC5-RRC message; or
feeding back by an RRC message.

19. The method according to claim 18, wherein the feeding back by the feedback resource corresponding to the first indication information comprises:
feeding back by a physical sidelink feedback channel (PSFCH) or a physical uplink control channel (PUCCH).

20. The method according to any one of claims 17 to 19, wherein feeding back the second indication information by the MAC CE comprises:
feeding back the second indication information by a first MAC CE, wherein the first MAC CE is dedicated to feeding back whether the shared grant resource is used.

21. The method according to any one of claims 17 to 20, wherein the second indication information is used to indicate at least one of following states of:
correctly receiving the first indication information but not using the grant resource indicated by the first indication information;
correctly receiving the first indication information and using the grant resource indicated by the first indication information; or
not correctly receiving the first indication information.

22. The method according to any one of claims 1 to 21, wherein the method further comprises:
in a case where the grant resource indicated by the first indication information is determined to be used, triggering an MAC layer to perform resource reselection.

23. The method according to any one of claims 1 to 22, wherein the method further comprises:
after the grant resource indicated by the first indication information is used, triggering an MAC layer to perform resource reselection.

24. The method according to any one of claims 1 to 23, wherein the first indication information is transmitted by a network device or transmitted by a second terminal.

25. The method according to any one of claims 1 to 24, wherein the method further comprises:
transmitting the data to be transmitted on the target logical channel by using the grant resource.

26. The method according to any one of claims 1 to 25, wherein if the first indication information carries target address information, the target address information is the target address information carried in the first indication information; or
if the first indication information does not carry target address information, the target address information is any target address information.

27. A wireless communication method, comprising:
transmitting, by a first device, first indication information to a first terminal, wherein the first indication information is used to indicate a shared grant resource; and
receiving, by the first device, second indication information transmitted by the first terminal, wherein the second indication information is used to indicate whether the shared grant resource is used.

28. The method according to claim 27, wherein the first device is a network device or a second terminal.

29. The method according to claim 27 or 28, wherein the first indication information is used to indicate at least one of:
remaining duration information of a channel occupancy time (COT), available sub-band information, channel access priority class (CAPC) information, or COT sharing identity (ID) information.

30. The method according to claim 29, wherein the COT sharing identity (ID) information comprises at least one of:
a target terminal ID, a terminal group ID, service identity information, or a sidelink (SL) zone ID.

31. The method according to any one of claims 27 to 30, wherein the first indication information is transmitted by at least one of following signalings:
an SL media access control control element (MAC CE), a PC5-radio resource control (RRC) message, a downlink MAC CE, or an RRC message.

32. The method according to any one of claims 27 to 31, wherein the first indication information is transmitted for resource multiplexing with a first MAC service data unit (SDU) or a first SL MAC CE, wherein
the first MAC SDU or the first SL MAC CE corresponds to first target address information, and target address information carried by the first indication information comprises the first target address information, or
the first MAC SDU or the first SL MAC CE is an MAC SDU or MAC CE to be transmitted of a transmitting end device of the first indication information.

33. The method according to claim 32, wherein
the first indication information carries one piece of target address information, and the first target address information is the one piece of target address information; or
the first indication information carries multiple pieces of target address information, and the first target address information is any one of the multiple pieces of target address information; or
the first indication information does not carry target address information, and target address information of the first MAC SDU or the first SL MAC CE is any one piece of target address information.

34. The method according to any one of claims 27 to 33, wherein the second indication information is transmitted by at least one of:
feeding back by a feedback resource corresponding to the first indication information;
feeding back by an MAC CE;
feeding back by a PC5-RRC message; or
feeding back by an RRC message.

35. The method according to claim 34, wherein the feeding back by the feedback resource corresponding to the first indication information comprises:
feeding back by a physical sidelink feedback channel (PSFCH) or a physical uplink control channel (PUCCH).

36. The method according to claim 34 or 35, wherein the feeding back by the MAC CE comprises:
feeding back by a first MAC CE, wherein the first MAC CE is dedicated to feeding back whether the shared grant resource is used.

37. The method according to any one of claims 27 to 36, wherein the second indication information is used to indicate at least one of following states of:
correctly receiving the first indication information but not using the grant resource indicated by the first indication information;
correctly receiving the first indication information and using the grant resource indicated by the first indication information; or
not correctly receiving the first indication information.

38. A terminal device, comprising:
a communication unit, configured to receive first indication information, wherein the first indication information is used to indicate a shared grant resource; and
a processing unit, configured to allocate the grant resource to data to be transmitted on a target logical channel, according to target address information and priority information of logical channels, wherein the target logical channel comprises at least one logical channel, and the target address information comprises target address information to which the target logical channel belongs.

39. The terminal device according to claim 38, wherein the first indication information is used to indicate at least one of:
remaining duration information of a channel occupancy time (COT), available sub-band information, channel access priority class (CAPC) information, or COT sharing identity (ID) information.

40. The terminal device according to claim 39, wherein the COT sharing identity (ID) information comprises at least one of: a target terminal ID, a terminal group ID, service identity information, or a sidelink (SL) zone ID.

41. The terminal device according to any one of claims 38 to 40, wherein the first indication information is transmitted by at least one of following signalings:
an SL media access control control element (MAC CE), a PC5-radio resource control (RRC) message, a downlink MAC CE, or an RRC message.

42. The terminal device according to any one of claims 38 to 41, wherein the first indication information is transmitted for resource multiplexing with a first MAC service data unit (SDU) or a first SL MAC CE, wherein
the first MAC SDU or the first SL MAC CE corresponds to first target address information, and target address information carried by the first indication information comprises the first target address information, or
the first MAC SDU or the first SL MAC CE is an MAC SDU or MAC CE to be transmitted of a transmitting end device of the first indication information.

43. The terminal device according to claim 42, wherein the first indication information carries one piece of target address information, and the first target address information is the one piece of target address information; or
the first indication information carries multiple pieces of target address information, and the first target address information is any one of the multiple pieces of target address information; or
the first indication information does not carry target address information, and target address information of the first MAC SDU or the first SL MAC CE is any one piece of target address information.

44. The terminal device according to any one of claims 38 to 43, wherein the processing unit is further configured to:
select the target logical channel, from logical channels that the target address information has, according to at least one of whether there is data to be transmitted on the logical channels, hybrid automatic repeat request (HARQ) attributes of the logical channels, and resource attributes available for the logical channels.

45. The terminal device according to claim 44, wherein the target logical channel is a logical channel satisfying at least one of:
a condition that there is data to be transmitted on the target logical channel;
a condition that in a case where the grant resource indicated by the first indication information is a configured grant (CG) resource, the target logical channel is configured to be allowed to use the CG resource;
a condition that in a case where the grant resource indicated by the first indication information is a CG resource, an available CG resource configuration corresponding to the target logical channel comprises the CG resource indicated by the first indication information; or
a condition that a hybrid automatic repeat request (HARQ) attribute of the target logical channel and an HARQ attribute corresponding to a logical channel with a highest priority are the same.

46. The terminal device according to claim 45, wherein the first indication information carries one piece of target address information, and the target logical channel belongs to the one piece of target address information.

47. The terminal device according to claim 45, wherein the first indication information carries multiple pieces of target address information, and the target logical channel belongs to second target address information of the multiple pieces of target address information, wherein the second target address information is target address information of a logical channel with a highest priority among the multiple pieces of target address information.

48. The terminal device according to any one of claims 45 to 47, wherein the condition that the target logical channel is configured to be allowed to use the CG resource, comprises:
a condition that a sidelink CG type allowed (sl-configuredgranttypeallowed) parameter corresponding to the target logical channel is set to be true.

49. The terminal device according to any one of claims 45 to 48, wherein the condition that the available CG resource configuration corresponding to the target logical channel comprises the CG resource indicated by the first indication information, comprises:
a condition that a sidelink allowed CG list (sl-allowedCG-list) configuration corresponding to the target logical channel comprises a CG index corresponding to the grant resource indicated by the first indication information.

50. The terminal device according to any one of claims 38 to 49, wherein the processing unit is further configured to:
allocate the grant resource to the target logical channel in sequence in descending order of priorities of the logical channels.

51. The terminal device according to any one of claims 38 to 50, wherein the processing unit is further configured to:
select a logical channel j with SBj greater than 0 among the target logical channel, and allocate a resource to each logical channel in sequence in descending order of priorities of the logical channels, wherein j is an integer and SBj is a variable maintained by the logical channel j; and
subtract, from SBj corresponding to the logical channel j, a size of an MAC SDU allocated to the logical channel j, to obtain an updated SBj.

52. The terminal device according to claim 51, wherein in a case where a prioritized bit rate (PBR) of the logical channel j is set to be infinite, and in a case where a resource is allocated to all data to be transmitted on the logical channel j, a resource is then allocated to a logical channel with a priority lower than that of the logical channel j.

53. The terminal device according to claim 51 or 52, wherein
the terminal device initializes SBj to 0 when establishing the logical channel j; and/or
the terminal device increases SBj by PBR*T before performing logical channel prioritization (LCP) processing procedure each time, wherein T is a time interval from a last time instant when SBj was increased to a current time instant; and/or
in a case where the updated SBj is larger than a sidelink token bucket capacity, SBj is set to the sidelink token bucket capacity.

54. The terminal device according to any one of claims 38 to 53, wherein the communication unit is further configured to:
transmit second indication information, wherein the second indication information is used to indicate whether the shared grant resource is used.

55. The terminal device according to claim 54, wherein the second indication information is transmitted by at least one of:
feeding back by a feedback resource corresponding to the first indication information;
feeding back by an MAC CE;
feeding back by a PC5-RRC message; or
feeding back by an RRC message.

56. The terminal device according to claim 55, wherein the feeding back by the feedback resource corresponding to the first indication information comprises:
feeding back by a physical sidelink feedback channel (PSFCH) or a physical uplink control channel (PUCCH).

57. The terminal device according to any one of claims 54 to 56, wherein feeding back the second indication information by the MAC CE comprises:
feeding back the second indication information by a first MAC CE, wherein the first MAC CE is dedicated to feeding back whether the shared grant resource is used.

58. The terminal device according to any one of claims 54 to 57, wherein the second indication information is used to indicate at least one of following states of:
correctly receiving the first indication information but not using the grant resource indicated by the first indication information;
correctly receiving the first indication information and using the grant resource indicated by the first indication information; or
not correctly receiving the first indication information.

59. The terminal device according to any one of claims 38 to 58, wherein the processing unit is further configured to:
in a case where the grant resource indicated by the first indication information is determined to be used, trigger an MAC layer to perform resource reselection.

60. The terminal device according to any one of claims 38 to 59, wherein the processing unit is further configured to:
after the grant resource indicated by the first indication information is used, trigger an MAC layer to perform resource reselection.

61. The terminal device according to any one of claims 38 to 60, wherein the first indication information is transmitted by a network device or transmitted by a second terminal.

62. The terminal device according to any one of claims 38 to 61, wherein the communication unit is further configured to:
transmit the data to be transmitted on the target logical channel by using the grant resource.

63. The terminal device according to any one of claims 38 to 62, wherein if the first indication information carries target address information, the target address information is the target address information carried in the first indication information; or
if the first indication information does not carry target address information, the target address information is any target address information.

64. A communication device, comprising:
a communication unit, configured to send first indication information to a first terminal, wherein the first indication information is used to indicate a shared grant resource; and
receive second indication information transmitted by the first terminal, wherein the second indication information is used to indicate whether the shared grant resource is used.

65. The communication device according to claim 64, wherein the communication device is a network device or a second terminal.

66. The communication device according to claim 64 or 65, wherein the first indication information is used to indicate at least one of:
remaining duration information of a channel occupancy time (COT), available sub-band information, channel access priority class (CAPC) information, or COT sharing identity (ID) information.

67. The communication device according to claim 65, wherein the COT sharing identity (ID) information comprises at least one of:
a target terminal ID, a terminal group ID, service identity information, or a sidelink (SL) zone ID.

68. The communication device according to any one of claims 64 to 67, wherein the first indication information is transmitted by at least one of following signalings:
an SL media access control control element (MAC CE), a PC5-radio resource control (RRC) message, a downlink MAC CE, or an RRC message.

69. The communication device according to any one of claims 64 to 68, wherein the first indication information is transmitted for resource multiplexing with a first MAC service data unit (SDU) or a first SL MAC CE, wherein
the first MAC SDU or the first SL MAC CE corresponds to first target address information, and target address information carried by the first indication information comprises the first target address information, or
the first MAC SDU or the first SL MAC CE is an MAC SDU or MAC CE to be transmitted of a transmitting end device of the first indication information.

70. The communication device according to claim 69, wherein the first indication information carries one piece of target address information, and the first target address information is the one piece of target address information; or
the first indication information carries multiple pieces of target address information, and the first target address information is any one of the multiple pieces of target address information; or
the first indication information does not carry target address information, and target address information of the first MAC SDU or the first SL MAC CE is any one piece of target address information.

71. The communication device according to any one of claims 64 to 70, wherein the second indication information is transmitted by at least one of:
feeding back by a feedback resource corresponding to the first indication information;
feeding back by an MAC CE;
feeding back by a PC5-RRC message; or
feeding back by an RRC message.

72. The communication device according to claim 71, wherein the feeding back by the feedback resource corresponding to the first indication information comprises:
feeding back by a physical sidelink feedback channel (PSFCH) or a physical uplink control channel (PUCCH).

73. The communication device according to claim 71 or 72, wherein the feeding back by the MAC CE comprises:
feeding back by a first MAC CE, wherein the first MAC CE is dedicated to feeding back whether the shared grant resource is used.

74. The communication device according to any one of claims 64 to 73, wherein the second indication information is used to indicate at least one of following states of:
correctly receiving the first indication information but not using the grant resource indicated by the first indication information;
correctly receiving the first indication information and using the grant resource indicated by the first indication information; or
not correctly receiving the first indication information.

75. A terminal device, comprising: a processor and a memory, wherein the memory is configured to store a computer program, the processor is configured to call and run the computer program stored in the memory, to perform the method according to any one of claims 1 to 26.

76. A communication device, comprising: a processor and a memory, wherein the memory is configured to store a computer program, the processor is configured to call and run the computer program stored in the memory, to perform the method according to any one of claims 27 to 37.

77. A chip, comprising: a processor, wherein the processor is configured to call and run a computer program from a memory, to cause a device equipped with the chip to perform the method according to any one of claims 1 to 26, or the method according to any one of claims 27 to 37.

78. A computer readable storage medium, wherein the computer readable storage medium is configured to store a computer program and the computer program causes a computer to perform the method according to any one of claims 1 to 26, or the method according to any one of claims 27 to 37.

79. A computer program product, comprising computer program instructions, wherein the computer program instructions cause a computer to perform the method according to any one of claims 1 to 26, or the method according to any one of claims 27 to 37.

80. A computer program, wherein the computer program causes a computer to perform the method according to any one of claims 1 to 26, or the method according to any one of claims 27 to 37.
